# EUROPÄISCHE PATENTANMELDUNG

(11) **EP 4 588 661 A1**
(43) Veröffentlichungstag der Anmeldung: **23.07.2025**
(21) Anmeldenummer: 24152879.3
(22) Anmeldetag: 19.01.2024
(51) Int. Cl.: B32B 27/30, B32B 7/02, B32B 7/06, B32B 7/12, B32B 27/08, B32B 27/10, B32B 27/32

(54) **ZWISCHENSCHICHT FÜR EIN VERBESSERTES RECYCLING VON MEHRSCHICHTIGEN VERBUNDMATERIALIEN**

(71) Anmelder: Tchibo GmbH, 22297 Hamburg (DE)
(72) Erfinder: DÖHMEN, Ben, 20144 Hamburg (DE)
(74) Vertreter: Frei Patent Attorneys

(57) **Zusammenfassung**

Die Erfindung betrifft die Verwendung einer Polyvinylacetat-Zwischenschicht für die Herstellung eines Mehrschicht-Verbundmaterials und das mehrschichtige Material enthaltend eine solche Zwischenschicht zur verbesserten Trennung von zwei anliegenden Schichten in Recyclingprozessen.

## Beschreibung

Die Erfindung betrifft die Verwendung einer Polyvinylacetat-Zwischenschicht für die Herstellung eines Mehrschicht-Verbundmaterials und das mehrschichtige Material enthaltend eine solche Zwischenschicht zur verbesserten Trennung von zwei anliegenden Schichten.

Um positive Eigenschaften verschiedener Materialien miteinander zu kombinieren werden heutzutage in unterschiedlichen Anwendungen mehrschichtige Verbundmaterialien verwendet. Dies ist zum Beispiel bei Lebensmittelverpackungen aus Kunststoffen der Fall. Hier werden die notwendigen Barrieren gegen Wasser/Wasserdampf und Gase sowie Aromastoffe meist nur durch die gleichzeitige Verwendung unterschiedlicher Materialien erreicht. Die einzelnen Schichten halten dabei z.T. nur durch haftvermittelnde Schichten bzw. Kleber zusammen.

Recycling trägt als wesentlicher Bestandteil der Kreislaufwirtschaft dazu bei, Materialkreisläufe zu schließen oder zu verlangsamen und so den Einsatz natürlicher Ressourcen und die Erzeugung von Emissionen zu vermindern. Neben der Einsparung von Verpackungen ist es daher ein häufiges Ziel von Herstellern, Verbrauchern und zunehmend den Gesetzgebern die Recyclierbarkeit generell und insbesondere auch von Verbundmaterialien zu verbessern. Dafür ist es wichtig, dass sich die Materialien möglichst vollständig zu Sekundärrohstoffen aufbereiten lassen. Die so produzierten Stoffe werden als Recyclate oder Regenerate bezeichnet. Zudem sollte deren Qualität und Reinheit besonders hoch sein, damit diese Sekundärrohstoffe vielfältig einsetzbar sind. Die Reinheit der Recyclate von mehrschichtigen Verbundmaterialien kann verbessert werden, indem man eine möglichst vollständige Trennung verschiedener Schichten ermöglicht bzw. so vereinfacht, dass sie wirtschaftlich werden.

Neben dem Schutz gegen Feuchtigkeit, Wasser und Fett ist der Widerstand gegen Sauerstoffdurchlässigkeit (OTR) ein zentraler Parameter von Verpackungsstrukturen, die für Lebensmittelanwendungen eingesetzt werden und ist besonders bei der Umstellung auf Monomaterial-Systemen oft problematisch zu erreichen. Eine Lösung sind dünne Schichten aus Barrierelacken. Sie können die hohen OTR-Anforderungen erreichen und die zudem die Haltbarkeitsanforderungen erfüllen. Allerdings sind diese Lacke im Recyclingprozess oft störend, da sie nicht vollständig vom Trägermaterial ablösbar sind.

Die Aufgabe der Erfindung ist es eine Zwischenschicht für die Herstellung eines mehrschichtigen Verbundmaterials zur Verfügung zu stellen, die mindestens einen der Nachteile von bisherigen mehrschichtigen Verpackungen verbessert und zugleich die vorteilhaften Eigenschaften erhält.

Mindestens einen dieser Aspekte der Aufgabe löst die Verwendung einer Zwischenschicht für die Herstellung eines mehrschichtigen Verbundmaterials, wobei die Zwischenschicht mindestens 98 Gew.% Polyvinylalkohol enthält und bei einer Temperatur von maximal 40°C in Wasser löslich ist. Damit können Schichten oder deren Materialien, die bislang nur schlecht oder nicht vollständig voneinander getrennt werden können vollständig voneinander abgelöst werden.

Die PVOH-Zwischenschicht kann unterschiedliche Funktionen aufweisen. Die PVOH-Zwischenschicht kann sich in einem kalten Waschvorgang des Recyclingprozesses komplett auflösen und hinterlässt somit für den weiteren Prozess zwei vollständig voneinander getrennte zuvor an der PVOH-Zwischenschicht anliegende Schichten. Diese Schichten lassen sich danach als reines Rezyklat wiedergewinnen. Rein bedeutet in diesem Zusammenhang, dass es keine Verunreinigungen durch Reste der jeweils anderen Schicht gibt. Die PVOH-Zwischenschicht kann aber auch als Gasbarriere dienen. In einer Ausführungsform ist die PVOH-Zwischenschicht jedoch so ausgeformt, z.B. so dünn, dass sie keine wesentliche Gas-Barrierefunktion ausüben kann. Die durch die PVOH-Zwischenschicht zusätzlich erreichte Sauerstoffbarriere kann selbst bei einer geringen relativen Feuchte (60%) und 20°C mehr als 20 cm³·m ²·Tag ¹·atm oder bevorzugt mehr als 50 cm³·m ²·Tag ¹·atm oder weiter bevorzugt mehr als 100 cm³·m ²·Tag ¹·atm liegen. Die Sauerstoff- oder allgemeiner Gasbarrierefunktion kann dann von einer anderen Schicht übernommen werden, sofern diese Funktion gebraucht wird.

Polyvinylalkohol (PVOH) ist ein häufig verwendetes Polymer. Es kann aus biogenen Rohstoffen (nachwachsenden Rohstoffen) bestehen und ist in wässriger Umgebung biologisch abbaubar. PVOH zeichnet sich durch eine hohe Reißfestigkeit und Elastizität aus. Diese Eigenschaften sind abhängig von der Luftfeuchtigkeit, da der PVOH Wasser absorbiert. Als thermoplastischer Kunststoff lassen sich einige PVOH-Typen grundsätzlich mit den gängigen Kunststoffverarbeitungsverfahren und die wasserlöslichen Typen als Lösung in Wasser verarbeiten. Bei geeigneter Rohstoffauswahl inkl. Additivierung (v. a. Zugabe von Weichmachern) eignet es sich sowohl für die Folienextrusion, das Thermoformen, den Spritzguss als auch das Blasformen. Es ist bevorzugt, wenn man mit dem PVOH der vorliegenden Erfindung bei 20 °C eine mindestens 4% Lösung in Wasser herstellen kann.

Die Zwischenschichten der vorliegenden Erfindung enthalten mindestens 98 Gew.% Polyvinylalkohol. Dem PVOH können Additive wie Weichmacher zugemischt werden, die eine Verarbeitung bzw. Schichtbildung fördern. Dabei ist es bevorzugt, wenn diese Additive biologisch abbaubar sind. Ein mögliches Additiv sind geringe Mengen Wasser oder Salze. Es kann sich aber auch um reines PVOH handeln. Die PVOH-Zwischenschicht kann auch eine Mischung verschiedener PVOH-Polymere mit unterschiedlichen Eigenschaften aufweisen oder daraus bestehen.

Das PVOH der vorliegenden Erfindung kann ein PVOH mit einen Hydrolysegrad von 60 bis 98 %, und bevorzugt von 70 75 bis 95% und weiter bevorzugt von 8075 bis 90% sein. Das verwendete PVOH kann ein Molekulargewicht von 13 000 bis 80 000 aufweist, und bevorzugt von 15 000 bis 60 000 und weiter bevorzugt von 18 000 bis 50 000 aufweisen. Das PVOH kann zudem so gewählt sein, dass es sich bei unter 40°C, bevorzugt unter 35° C und weiter bevorzugt unter 20°C vollständig auflöst.

Die PVOH-Zwischenschicht der vorliegenden Erfindung ist bei einer Temperatur von maximal 40°C in Wasser löslich. In einer Ausführungsform kann sich die PVOH-Zwischenschicht in Wasser komplett auflösen. Dies ermöglicht die einfache und vollständige Ablösung der beiden Schichten die an der PVOH-Zwischenschicht anliegen. Es ist bevorzugt, dass sich die PVOH-Zwischenschicht vollständig und rückstandfrei in Wasser auflöst. Die Auflösung der PVOH-Zwischenschicht kann bevorzugt bei max. 40°C, bevorzugt unter 35°C oder unter 20°C und in unter einer Stunde (bevorzugt unter 30 Minuten) geschehen. Die Dauer dieser Auflösungsprozesse kann zwischen 5 und 60 Minuten, bevorzugt zwischen 10 und 45 Minuten du weiter bevorzugt zwischen 15 und 30 Minuten betragen. Im Recyclingprozess kann die Auflösung der PVOH-Zwischenschicht somit in bestehende Kaltwaschschritte integriert werden. Diesen kann ein Zerkleinerungsschritt vorausgehen.

In gelöster Form kann das PVOH direkt zu neuen Produkten, wie Folien, verarbeitet, zur Wiederverwendung zurückgewonnen oder durch die Einwirkung von Mikroorganismen und Bakterien vollständig zu Wasser (H₂O) und Kohlenstoffdioxid (CO₂) abgebaut werden. Im Gegensatz zu nicht abbaubaren Polymeren, egal ob fossil oder biobasiert, erzeugen einmal aufgelöste wasserlösliche PVOH-Granulate und Produkte kein Mikroplastik. Dadurch dass sich das PVOH in einem Waschprozess in der Recyclinganlage auflöst werden die daraus resultierenden Schichten bzw. deren Materialien (Granulate) nicht verunreinigt.

Bei der Herstellung eines mehrschichtigen Verbundmaterials kann die PVOH-Zwischenschicht durch verschiedene Verfahren erzeugt werden. So kann eine wässerige Lösung des PVOH direkt auf eine der anliegenden Schichten (z.B. Papier oder Polymer) aufgetragen werden. Eine anschliessende Trocknung führt dann zur Film- oder Schichtbildung. Bei der Verwendung einer wässrigen PVOH-Lösung zur Schichtbildung kann die noch feuchte Schicht auch als Klebstoff für die weitere anliegende Schicht verwendet werden, z.B. in einem Kaschierwerk, wo beide anliegenden (benachbarten) Schichten nach dem Auftrag der wässrigen PVOH-Zwischenschicht mittels Walzen zusammengepresst werden. Die Dicke der PVOH-Zwischenschicht liegt bei 0,5 bis 10 µm, bevorzugt 1µm bis 8 µm und weiter bevorzugt bei 2 bis 5 µm.

Die PVOH-Zwischenschicht kann auch durch Coextrusion mit einer der anderen Schichten oder beiden Schichten hergestellt werden. Die PVOH-Zwischenschicht braucht keine weiteren Haftvermittler und liegt direkt an den hierin beschriebenen, benachbarten Schichten an.

Ein zweiter Aspekt der vorliegenden Erfindung betrifft auch mehrschichtige Verbundmaterialien, die eine hierin definierte PVOH-Zwischenschicht aufweisen.

PVOH gilt als gesundheitlich unbedenklich. Sowohl bei Aufnahme mit der Nahrung als auch über die Haut werden keine gesundheitlichen Gefahren erwartet. Es ist zudem beständig gegenüber Ölen, Fetten und organischen Lösungsmitteln. Die PVOH-Zwischenschichten eignen sich daher auch für Verbundmaterialien zur Herstellung einer Lebensmittelverpackung und insbesondere eines Beutels mit Kaffee für ein Getränkezubereitungssystem.

Mit Polyethylen (PE) beschichtetes Papier ist zu einer beliebten Wahl für Lebensmittelverpackungen und -etiketten geworden. Durch PE-Beschichtung wird Papier fett- und wasserdicht. Damit können viele Lebensmittel optimal verpackt werden. Insbesondere Verpackungen für flüssige Nahrungsmittel bestehen deshalb oft aus PE-beschichtetem Papier. Das Recycling von bislang bekannten PE-beschichtetem Papier oder Karton erfordert einen Prozess, bei dem die Papierfasern mithilfe von Wasser und Chemikalien von der Polymerbeschichtung getrennt werden. Das Verfahren ist teuer und bietet im Vergleich zu anderen Papierprodukten nur begrenzte Recyclingmöglichkeiten. In anderen Verfahren ist ein Teil der Fasern der Papierschicht nicht zurückgewinnbar bzw. sorgen Reste der Polymere an den Fasern, dass optische Unreinheiten die Bewertung der Rezyklierbarkeit herabstufen.

Es hat sich gezeigt, dass die PVOH-Zwischenschichten sowohl auf der Papier- als auch der PE-Schicht gut haften und diese miteinander verbinden können. Gleichzeitig kann aber ein einfacher Wachschritt im Recycligverfahren - insbesondere nach der Zerkleinerung der Verpackungen - die Auftrennung beider Schichten bewirken.

Es gibt eine Vielzahl weiterer Papierprodukte, die mit einer flüssigkeits- oder gasdichten Beschichtung versehen werden müssen. Ein Aspekt der vorliegenden Erfindung betrifft daher auch mehrschichtige Verbundmaterialien, die eine Papierschicht oder Papiergrundschicht mit einer flüssigkeits- oder gasdichten Beschichtung aufweisen, wobei zwischen der Papierschicht und der flüssigkeits- oder gasdichten Beschichtung eine PVOH-Zwischenschicht vorliegt. Allgemein betrifft der Aspekt der vorliegenden Erfindung betrifft daher auch mehrschichtige Verbundmaterialien, die eine Papierschicht oder Papiergrundschicht mit einer polymeren Beschichtung aufweisen, die dem Papier eine weitere Eigenschaft verleihen, wobei zwischen der Papierschicht und der polymeren Beschichtung eine PVOH-Zwischenschicht vorliegt. Eine Wasserdampfbarriere von Papierverpackungen kann auch durch Lacke aus Acrylsäureethylestern erreicht werden.

Eine Ausführungsform der Erfindung betrifft daher die Verwendung der PVOH-Zwischenschicht zwischen einer Papierschicht und einer weiteren Schicht die aus einem oder mehreren Polymeren bestehen kann. Die Polymere der weiteren Schicht können PE oder Copolymere von Acrylsäureestern mit Ethylen (Ethylene acrylic acid copolymer; EAA), insbesondere Copolymere von Acrylsäureethylestern mit Ethylen (EEA) sein. Insbesondere Barrierelacke auf Basis von EAA haben eine sehr gute Wasserdampfbarriere, aber auch den Nachteil, dass sie im Papierrecycling erheblich stören. Somit ist es von Vorteil, wenn in einem sehr frühen Waschschritt der EAA-Lack vollständig vom Papier abtrennbar ist, so dass keine Rückstände im Altpapier verbleiben. Dies kann durch eine PVOH-Zwischenschicht erreicht werden, indem diese zwischen dem Papier und dem EAA Lack aufgetragen wird.

Allgemein betrifft der zweite Aspekt der Erfindung ein mehrschichtiges Verbundmaterial mit einer PVOH-Zwischenschicht, die mindestens 98 Gew.% Polyvinylalkohol enthält und bei einer Temperatur von maximal 40°C in Wasser löslich ist. Das mehrschichtiges Verbundmaterial kann eine Papierschicht, eine PVOH-Zwischenschicht und mindestens eine weitere Schicht aus einem Polymer umfassen. Die weitere Schicht kann folgende Polymere aufweisen oder aus Ihnen bestehen: PE, Polyproyplen (PP), EEA oder Polyester. Sie besteht bevorzugt aus zumindest 98 Gew.% des reinen Polymers, wie PE, PP, EEA oder Polyester.

Die PVOH-Zwischenschicht kann grundsätzlich in verschiedenen bekannten Verfahren z.B. als Lack, Drucklack oder Kaschierung aufgebracht werden. Sie kann auch mit allen gängigen Streichverfahren aufgebracht werden. Es ist bevorzugt, wenn die Zwischenschicht als wässrige Lösung auf der Papierschicht aufgebracht wird. Diese Lösung kann hochviskos sein. Die PVOH-Zwischenschicht kann 0,5 bis 10 µm und bevorzugt 1 bis 5 µm dick sein. Die Zwischenschicht kann einen Klebstoff, der für die zweite Schicht ansonsten notwendig wäre, eventuell ersetzen und selbst als Klebstoff für die weitere Schicht auf Papier dienen.

Die weitere polymere Schicht, z.B. aus PE, kann eine Dicke von 1 bis 100 µm und bevorzugt 5 bis 50 µm, weiter bevorzugt 10 bis 35 µm haben. Die hierin beschriebenen Verbundmaterialien mit Papier sind nachgewiesenermaßen recyclingfähig; die Cellulosefasern können vollständig zurückgewonnen werden. Durch die vollständige Auf- bzw. Ablösung der PVOH-Zwischenschicht kann auch das Polymer der weiteren Schicht, wie PE oder EAA mit sehr hoher Reinheit von mindestens 95 Gew.%, oder sogar mindestens 98 Gew.%, bevorzugt mindestes 99 Gew. % wiedergewonnen werden.

Papiere die mit PE oder EAA beschichtet sind bieten einen gewissen Schutz gegen Feuchtigkeit, Wasser und Fett. Es mangelt ihnen aber an ausreichenden Barriereeigenschaften gegenüber Sauerstoff und anderen Gasen. Dies macht sie für Verpackungsanwendungen, die hohe Sauerstoff-Barriereeigenschaften erfordern, ungeeignet. Es kann neben der Papier-, der PVOH-Zwischenschicht und der ersten weiteren (polymeren) Schicht daher noch zusätzlich eine Sauerstoffbarriereschicht vorhanden sein. Die PVOH-Zwischenschicht ist dabei zwischen dem Papier und der ersten weiteren Schicht angeordnet. Die Sauerstoffbarriere kann in diese weitere Schicht integriert sein (Mischung aus verschiedenen polymeren oder als Additiv) kann aber auch eine zusätzliche, äussere Schicht bilden. In der zusätzlichen Sauerstoffbarriereschicht kann PVOH vorhanden sein.

Wenn verpackte Produkte eine niedrige Sauerstoffdurchlässigkeit erfordern, können alternative Verpackungsmaterialien verwendet werden, die starke Sauerstoffbarriereeigenschaften bieten. Solche alternativen Verpackungen bestehen zum Beispiel aus Verbundmaterialien aus verschiedenen Polyoleofinen wie einer PE- und einer PP-Schicht.

Diese werden momentan im Recyclingprozess meist nicht getrennt, sondern als gemischtes Recyclat gewonnen, was aber als minderwertig gilt, da es nur begrenzt für die Herstellung neuer Produkte eingesetzt werden kann.

Ein weiterer Aspekt der Anmeldung betrifft daher ein mehrschichtiges Verbundmaterial, welches eine Polyoleofinschicht bestehend aus einem ersten Polyoleofin und mindestens eine weitere Polyoleofinschicht, bestehend aus einem zweiten Polyoleofin, umfasst, zwischen denen eine PVOH-Schicht angebracht ist.

Das erste Polyoleofin kann ein PE sein und das zweite Polyoleofin kann PP sein. Weitere mögliche Polyoleofine können auch Polymethylpenten (PMP), Polyisobutylen (PIB) und Polybutylen (PB, Polybuten-1) sein. Die PVOH-Zwischenschicht liegt dabei immer (unmittelbar) zwischen Schichten aus unterschiedlichen Polyoleofinen. Die Polyoleofinschichten können eine geringe (nicht mehr als 5 Gew. %, bevorzugt nicht mehr als 2 Gew. % und weiter bevorzugt nicht mehr als 1 Gew. %) Menge an Additiven aufweisen, die deren Recyclierbarkeit und Wiederverwertbarkeit nicht beeinflussen oder zumindest nicht stören.

Die Dichte von PE liegt zwischen 0,92 und 0,97 g/cm3, die von PP zwischen 0,9 und 0,91 g/cm3. Diese Werte liegen recht dicht beieinander. Um die Auftrennung des ersten von dem zweiten Polyoleofin zu erleichtern kann daher eine der beiden Schichten oder beide Polyoleofinschichten ein Additiv aufweisen, das die Dichte der Schicht bzw. des Materials aus dem die Schicht besteht verändert.

Zu allen hierin beschriebenen, mehrschichtigen Verbundmaterialien können neben der PVOH-Zwischenschicht und den beiden von dieser Zwischenschicht getrennten Schichten, noch weitere Schichten hinzukommen. Diese können aus den gleichen Materialien oder anderen Komponenten hergestellt sein. Generell können zusätzliche Zwischenschichten aus PVOH dazu beitragen, dass andere Komponenten aus weiteren Schichten der erfindungsgemässen Verbundmaterialien abtrennbar werden.

Die Aussagen, die zur Verwendung der PVOH-Zwischenschicht hierin gemacht wurden, gelten grundsätzlich auch für die hierin beschriebenen mehrschichtigen Verbundmaterialien und umgekehrt.

## Patentansprüche

1. Die Verwendung einer Zwischenschicht zur Herstellung eines mehrschichtigen Verbundmaterial, wobei die Zwischenschicht mindestens 98 Gew.% Polyvinylalkohol enthält und bei einer Temperatur von maximal 40°C in Wasser löslich ist.

2. Die Verwendung gemäss Anspruch 2, wobei die Zwischenschicht zwischen einer Papierschicht und einer weiteren Schicht liegt.

3. Die Verwendung gemäss Anspruch 3, wobei die weitere Schicht aus einem Polymer oder Polymergemisch besteht.

4. Die Verwendung gemäss Anspruch 3, wobei die Zwischenschicht als Lack, Drucklack oder Kaschierung aufgebracht wird.

5. Die Verwendung gemäss Anspruch 2, wobei die Zwischenschicht zwischen einer ersten Polyoleofinschicht umfassend PE und einer zweiten Polyoleofinschicht umfassend PP liegt.

6. Die Verwendung gemäss einem der vorhergehenden Ansprüche, wobei die Zwischenschicht als wässrige Lösung auf eine andere Schicht aufgebracht wird.

7. Die Verwendung gemäss einem der vorhergehenden Ansprüche, wobei die Zwischenschicht 1 bis 5 µm dick ist.

8. Die Verwendung gemäss einem der vorhergehenden Ansprüche, wobei die Zwischenschicht auch als Klebstoff für die benachbarten Schichten dient.

9. Mehrschichtiges Verbundmaterial mit einer PVOH-Zwischenschicht, die mindestens 98 Gew.% Polyvinylalkohol enthält und bei einer Temperatur von maximal 40°C in Wasser löslich ist.

10. Mehrschichtiges Verbundmaterial gemäss Anspruch 9 bestehend aus einer Papierschicht, der PVOH-Zwischenschicht und mindestens einer weiteren Schicht aus einem Polymer oder Polymergemisch.

11. Mehrschichtiges Verbundmaterial gemäss einem der Ansprüche 9 oder 10, wobei die weitere Schicht aus PE oder EEA besteht.

12. Mehrschichtiges Verbundmaterial gemäss Anspruch 9, umfassend eine Polyoleofinschicht aus einem ersten Polyoleofin, der PVOH-Zwischenschicht und mindestens eine weitere Polyoleofinschicht, aus einem zweiten Polyoleofin.

13. Mehrschichtiges Verbundmaterial gemäss Anspruch 12, wobei das erste Polyoleofin ein PE ist.

14. Mehrschichtiges Verbundmaterial gemäss Anspruch 13, wobei das zweite Polyoleofin ein PP ist.

15. Mehrschichtiges Verbundmaterial gemäss Anspruch 12, wobei das erste oder das zweite Polyoleofin einen Zusatzstoff aufweist, der die Dichte der Schicht verändert.
